# EUROPÄISCHE PATENTSCHRIFT

(11) **EP 1 119 470 B1**
(45) Veröffentlichungstag und Bekanntmachung des Hinweises auf die Patenterteilung: **03.09.2003**
(21) Anmeldenummer: 99950737.9
(22) Anmeldetag: 05.10.1999
(51) Int. Cl.: B60P 3/025

(54) **FAHRZEUG MIT INTEGRIERTER THEKE**
VEHICLE WITH AN INTEGRATED SALES COUNTER
VEHICULE A COMPTOIR INTEGRE

(30) Priorität: 16.10.1998 DE 19847860
(43) Veröffentlichungstag der Anmeldung: 01.08.2001
(73) Patentinhaber: Société des Produits Nestlé S.A., 1800 Vevey (CH)
(72) Erfinder: IRMSCHER, Arnfried, Markus, D-63165 Mühlheim am Main (DE); GRESSLER, Kajetan, D-65779 Kelkheim (DE)
(74) Vertreter: Thomas, Alain
(86) Internationale Anmeldenummer: EP9907799
(87) Internationale Veröffentlichungsnummer: WO00023299

(56) Entgegenhaltungen:
- WO-A-92/06617
- DE-U- 9 403 807
- DE-U- 29 616 476
- DE-U- 29 902 920
- FR-A- 2 068 120
- GB-A- 2 171 365
- US-A- 2 057 197
- US-A- 4 169 542
- PATENT ABSTRACTS OF JAPAN vol. 1996, no. 05, 31. Mai 1996 (1996-05-31) & JP 08 026018 A (HINO JUSHI:KK), 30. Januar 1996 (1996-01-30)

## Beschreibung

Die Erfindung betrifft ein Fahrzeug mit integrierter Theke zum Ausschenken von heißen Getränken, entsprechend den Merkmalen des Oberbegriffes von Anspruch 1.

### [Stand der Technik]

Nutzfahrzeuge mit Ladezonen sind in unterschiedlicher Ausgestaltung bekannt. Solche Nutzfahrzeuge werden auch als Kleinlastfahrzeuge in Dreirad-Bauweise hergestellt. Dabei befinden sich zwei Räder unterhalb der Ladezone und ein drittes Rad im Bereich eines sich vor der Ladezone befindlichen Führerhauses. Eine gattungsgemässe Vorrichtung ist aus DE-U-29616476 bekannt.

### [Aufgabe der Erfindung]

Der vorliegenden Erfindung liegt die Aufgabe zugrunde, ein äußerst kompaktes Fahrzeug zu schaffen, welches den Ausschank von heißen Getränken und die gleichzeitige Darbietung von anderen Verkaufswaren in einfacher Weise ermöglicht.

Die Aufgabe wird durch die Merkmale des kennzeichnenden Teiles des Anspruchs 1 gelöst.

Erfindungsgemäß ist die Ladezone des Fahrzeugs allseitig durch Wandteile verschlossen und durch Aufklappen der Wandteile wird eine Thekenfläche freigelegt. Die Thekenfläche umgibt eine Aufbereitungsmaschine zur Zubereitung von heißen Getränken und einen Warenträger, auf welchem zum Verkauf angebotene Waren auflegbar sind. Erfindungsgemäß wird ein äußerst kompaktes Fahrzeug geschaffen, in dessen Inneren sowohl eine Thekenfläche als auch eine Aufbereitungsmaschine für heiße Getränke, insbesondere für löslichen Kaffee, und ein Warenträger für weitere Waren, beispielsweise Getränkedosen, Schokoriegel usw., integriert ist.

Die Ansprüche 2 bis 15 betreffen vorteilhafte Weiterbildungen der Erfindung.

Die Wandteile können entsprechend Anspruch 2 jeweils eine Seitenwand an beiden Seiten des Fahrzeugs und eine Rückwand an der Rückseite des Fahrzeugs umfassen, die um eine Schwenkachse so aufklappbar sind, daß sie mit einem die Ladezone überdeckenden Deckenteil eine im wesentlichen ebene Dachfläche bilden. Die Dachfläche kann entsprechend Anspruch 3 durch zwei Eckenteile aus einem flexiblen Material, die beim Aufklappen der Seitenwände und der Rückwand zwischen diesen aufgespannt wird, ergänzt werden. Dadurch entsteht eine relativ große Dachfläche, die die Thekenfläche und am Rand der Thekenfläche stehende Personen vor Regen und Sonne schützt. Dadurch, daß Teile der Dachfläche durch die Seitenwände und die Rückwand der Ladezone gebildet werden, wird der Integrationsgrad des Fahrzeugs weiter erhöht.

Der Warenträger ist entsprechend Anspruch 4 vorzugsweise gekühlt, um die auf dem Warenträger befindlichen Waren kühl zu halten und insbesonders vor der Abwärme der Aufbereitungsmaschine zur Zubereitung der heißen Getränke zu schützen. Zur Verbesserung der Warenpräsentation hat der Warenträger vorzugsweise zu den Seiten des Fahrzeugs hin geneigte Warenaufnahmeflächen entsprechend Anspruch 5.

Entsprechend Anspruch 6 ist ein Vorratsbehälter für einen Wasservorrat vorgesehen, an welchen die Aufbereitungsmaschine und gegebenenfalls entsprechend Anspruch 7 zusätzlich ein Spülbecken angeschlossen ist. Das Spülbecken entwässert in einen Abwasserbehälter. Das Fahrzeug ist somit hinsichtlich der Wasserversorgung vollständig autark.

Das Fahrzeug verfügt vorzugsweise entsprechend Anspruch 8 über von der Seite oder der Rückseite des Fahrzeugs zugängliche Fächer zur Aufnahme eines Warenvorrats, des Getränkepulvers oder eines Tassenvorrats. Zumindest ein Teil der Fächer ist entsprechend Anspruch 9 vorzugsweise gekühlt. Das Fahrzeug ist entsprechend Anspruch 10 beispielsweise ein motorisiertes Dreirad.

Die Stromversorgung der Aufbereitungsmaschine und gegebenenfalls eines Kühlaggregats zum Kühlen des Warenträgers und der Fächer zur Aufnahme des Warenvorrats erfolgt entweder entsprechend Anspruch 11 mittels elektrischer Akkumulatoren, die von der Lichtmaschine des Fahrzeugs oder durch Solarzellen geladen werden oder entsprechend Anspruch 12 durch ein Stromaggregat mit einem separaten Verbrennungsmotor.

Auf der Thekenfläche ist entsprechend Anspruch 13 vorteilhaft zumindest ein Tassenspender vorgesehen, der einen mit der Thekenfläche verbundenen Befestigungszylinder und eine auf den Befestigungszylinder im wesentlichen vertikal aufsteckbare Hohlschiene umfaßt, die die Tassen unter Freilassung eines axialen Schlitzes umschließt. Dabei ragen Henkel der Tassen durch den Schlitz hindurch, so daß die Tassen in der Hohlschiene geführt sind. Der Tassenspender gestattet die Entnahme der jeweils obersten Tasse. Zur Bevorratung von mit Tassen bestückten weiteren Hohlschienen befindet sich in der Nähe des Deckenteils entsprechend Anspruch 14 eine Leiste mit horizontal angeordneten Befestigungszylindern, auf die die Hohlschienen im wesentlichen horizontal aufsteckbar sind. Die Hohlschienen sind daher im wesentlichen parallel zu dem Deckenteil ausgerichtet und befinden sich unmittelbar unterhalb des Deckenteils, so daß sich eine raumsparende Vorratshaltung für die Tassen ergibt. Vorteilhaft ist entsprechend Anspruch 15 an jeder Hohlschiene ein erstes Ende eines elastischen Bandes, beispielsweise eines Gummibandes, befestigt, das an seinem zweiten Ende ein hakenartiges Element aufweist, das in die oberste mehrerer gestapelter Tassen einhakbar ist. Das elastische Band bewirkt eine axiale Arretierung der gestapelten Tassen während der Vorratshaltung. Wenn die Hohlschiene auf den Befestigungszylinder an der Thekenfläche aufgesteckt wird, können die Tassen nach Lösen des elastischen Bandes ohne Schwierigkeiten von der Hohlschiene entnommen werden.

### [Beispiele]

Ein Ausführungsbeispiel des erfindungsgemäßen Fahrzeugs wird nachfolgend beispielhaft unter Bezugnahme auf die Zeichnung beschreiben. In der Zeichnung zeigen:
- Fig. 1: ein Ausführungsbeispiel des erfindungsgemäßen Fahrzeugs mit geschlossener Ladezone;
- Fig. 2: das in Fig. 1 dargestellte Ausführungsbeispiel des erfindungsgemäßen Fahrzeugs mit geöffneter Ladezone;
- Fig. 3: eine vergrößerte und detailliertere Ansicht eines erfindungsgemäßen Fahrzeugs entsprechend den Fig. 1 und 2; und
- Fig. 4: eine detaillierte Darstellung eines Tassenspenders, der bei dem in den Fig. 1 bis 3 dargestellten Ausführungsbeispiel des erfindungsgemäßen Fahrzeugs verwendet wird.

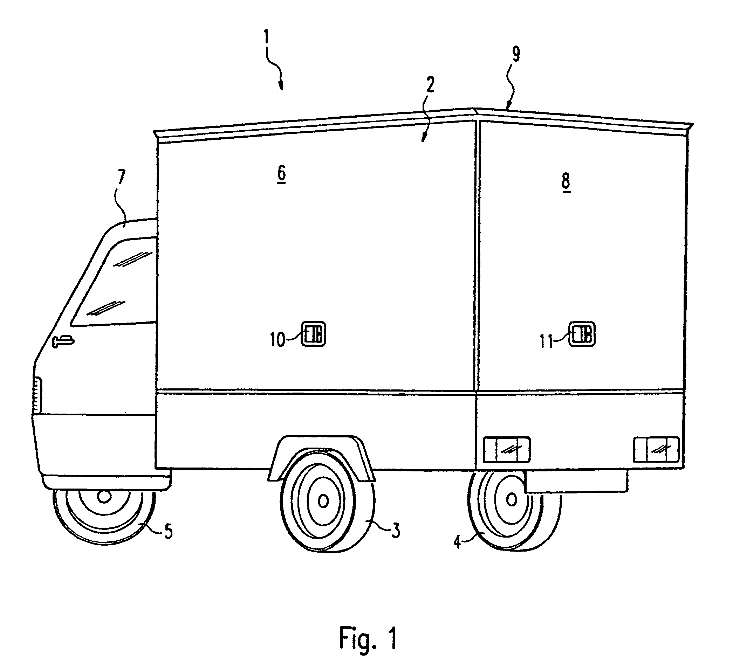

Fig. 1 zeigt eine Ausführungsbeispiel des erfindungsgemäßen Fahrzeugs 1 in einer perspektivischen Darstellung.

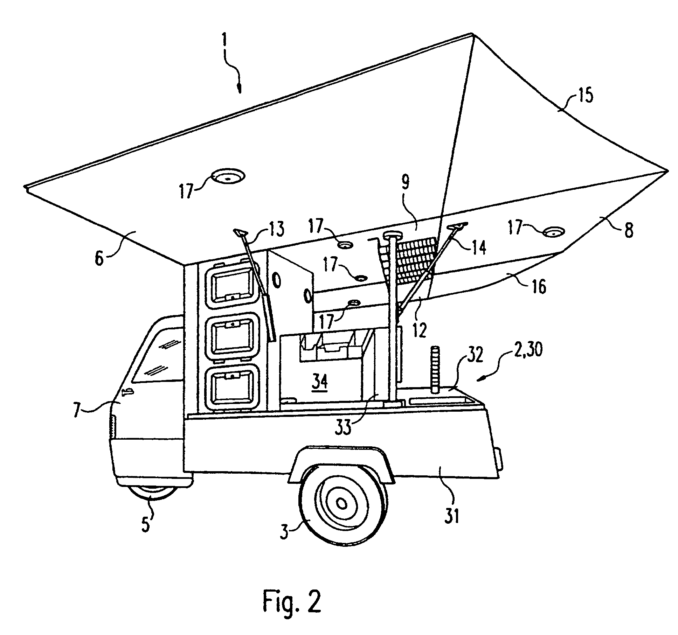

Das erfindungsgemäße Fahrzeug gliedert sich grob in eine Ladezone 2 und ein Führerhaus 7. Das Fahrzeug 1 ist in dem dargestellten bevorzugten Ausführungsbeispiel als Dreirad ausgebildet, wobei sich ein erstes und ein zweites Rad 3 und 4 unterhalb der Ladezone 2 befinden und ein drittes Rad 5 im Bereich des Führerhauses 7 angeordnet ist. Die Ladezone 2 ist allseitig durch Wandteile verschlossen. Die Wandteile bestehen aus zwei sich gegenüberliegenden Seitenwänden 6 und 12, wobei in Fig. 1 nur die Seitenwand 6 an der linken Fahrzeugseite erkennbar ist, einer Rückwand 8, einem Deckenteil 9 und einer aus Fig. 1 nicht erkennbaren, dem Führerhaus 7 benachbarten Vorderwand. Die beiden sich gegenüberliegenden Seitenwände 6, 12 und die Rückwand 8 sind um eine in der Nähe des Deckenteils 9 gelegene, im wesentlichen horizontale Schwenkachse nach oben klappbar, wie dies anhand von Fig. 2 noch näher beschrieben werden wird. Zum Öffnen der Seitenwände 6 und der Rückwand 8 sind jeweils Griffe 10 bzw. 11 vorgesehen.

Das Fahrzeug 1 ist für den Straßenverkehr zugelassen und deshalb großräumig transportierbar. Der Zweck des Fahrzeugs 1 besteht darin, an unterschiedlichen Orten den Ausschank von heißen Getränken, insbesondere von löslichem Kaffee, zu ermöglichen und gleichzeitig verschiedene andere Waren zum Verkauf anzubieten. In das Fahrzeug 1 ist deshalb eine in Fig. 2 im Überblick erkennbare Theke 30 in einer äußerst kompakten Bauweise integriert.

In Fig. 2 ist nicht nur die Seitenwand 6 an der linken Fahrzeugseite sondern auch die gegenüberliegende Seitenwand 12 an der rechten Fahrzeugseite erkennbar. Die beiden Seitenwände 6 und 12 und die Rückwand 8 sind etwa um 90° nach oben geklappt und jeweils mittels eines Stützgestells 13 bzw. 14 abgestützt. Die Seitenwände 6 und 12 bilden zusammen mit der Rückwand 8 und dem Deckenteil 9 eine im wesentlichen ebene Dachfläche, die an den Verbindungsecken zwischen den Seitenwänden 6 und 12 und der Rückwand 8 jeweils durch ein Eckteil 15 bzw. 16 ergänzt wird. Die Eckenteile 15 und 16 bestehen aus einem flexiblen Material, beispielsweise einer Kunststoffplane, und werden zwischen jeweils einer Seitenwand 6 bzw. 12 und der Rückwand 8 beim Aufklappen der Seitenwände 6 und 12 und der Rückwand 8 aufgespannt. Im in Fig. 1 dargestellten geschlossenen Zustand der Ladefläche 2 falten sich die Eckteile 15 und 16 selbsttätig zusammen. Wie aus Fig. 2 zu erkennen, ist die durch das Deckenteil 9 die beiden Seitenwände 6 und 12, die Rückwand 8 und die Eckteile 15 und 16 gebildete Dachfläche relativ großflächig, so daß die von der Ladezone 2 beinhaltete Theke 30 und um die Ladezone 2 herumstehende Personen vor Regen und Sonne geschützt sind. Die Seitenwände 6 und 12 und die Rückwand 8 können im aufgeklappten Zustand leicht gegenüber der Horizontalen geneigt sein, damit Regenwasser besser ablaufen kann. Zur Illumination der Theke 30 sind mehrere Beleuchtungskörper 17 vorgesehen.

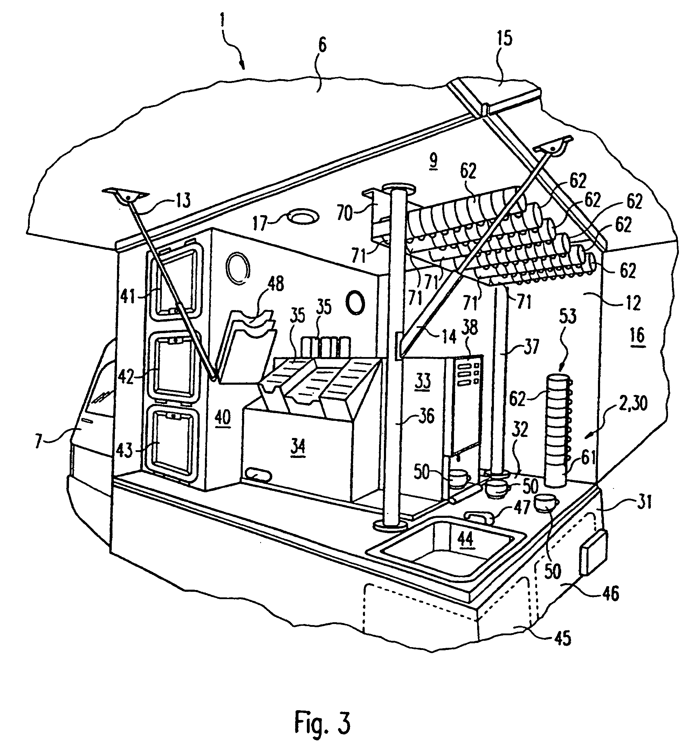

Fig. 3 zeigt eine vergrößerte und detailliertere Ansicht der im Inneren der Ladezone 2 gebildeten Theke 30. An der OberSeite eines kastenförmigen Fahrgestells 31 ist eine Thekenfläche 32 ausgebildet, die eine Aufbereitungsmaschine 33 zur .Zubereitung heißer Getränke und einen Warenträger 34, auf welchen zum Verkauf angebotene Waren 35 auflegbar sind, zumindest teilweise umgibt. Das Deckenteil 9 ist über Stützsäulen 36 und 37 gegenüber dem Fahrgestell 31 abgestützt.

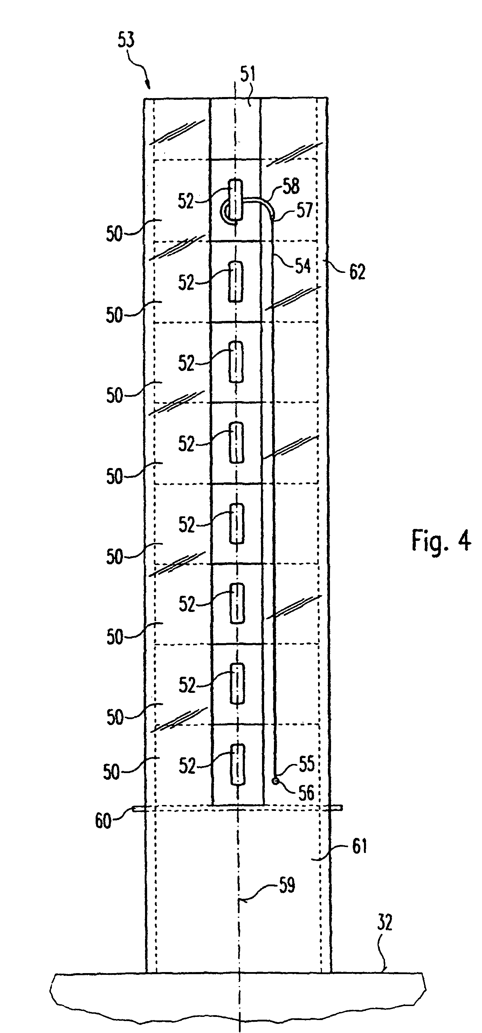

Die Aufbereitungsmaschine 33 ermöglicht die Zubereitung von heißen Getränken aus einem löslichen Getränkepulver, insbesondere von Kaffee aus einem löslichen Kaffeepulver, gegebenenfalls unter Hinzufügung weiterer Zusätze wie z. B. Trokkenmilch. Es kann auch die Zubereitung anderer Getränke, beispielsweise eines kakaohaltigen Getränks aus einem kakaohaitigen Getränkepulver oder eines Tees möglich sein. Ein Bedienfeld 38 gestattet beispielsweise die Einstellung der Konzentration, des Koffeingehalts oder der Geschmacksrichtung des Getränks. Unter einen Getränkeauslaß kann eine Tasse 50 gestellt werden, die das fertig zubereitete Getränk auffängt. Die Tassen 50 können einem anhand von Fig. 4 noch näher zu beschreibenden Tassenspender 53 entnommen werden.

Der Warenträger 34 wird vorzugsweise gekühlt, um die auf dem Warenträger 34 angeordneten Waren, beispielsweise Getränkedosen oder Schokoriegel, frisch zu halten. Der Warenträger 34 hat vorzugsweise eine dachförmige Oberfläche mit zwei zu jeweils einer Seite des Fahrzeugs 1 geneigten Warenaufnahmeflächen. Dadurch sind die Waren 35 den um die Thekenfläche 32 herumstehenden Kunden zugeneigt und deshalb besser präsentiert. Die Kühlung des Warenträgers 34 kann beispielsweise durch Umwälzen eines Kühlmittels erfolgen oder auch durch Peltierelemente.

Die Stromversorgung für den Betrieb der Aufbereitungsmaschine 33 und für die Kühlung des Warenträgers 34 kann beispielsweise mittels eines Stromaggregats mit einem Verbrennungsmotor erfolgen. Alternativ ist es auch denkbar, zur Stromversorgung wiederaufladbare elektrische Akkumulatoren vorzusehen, die beispielsweise von der Lichtmaschine des Fahrzeugs 1 oder durch beispielsweise an den Seitenwänden 6, 12, der Rückwand 8 und dem Deckenteil 9 angeordnete Solarzellen geladen werden.

In einer Schrankverkleidung 40 sind mehrere von einer Seite des Fahrzeugs 4 zugängliche Fächer 41, 42 und 43 vorgesehen, die der Aufnahme eines Warenvorrats, eines Vorrats an Getränkepulver oder eines Tassenvorrats dienen. Die Fächer 41, 42, 43 sind über seitliche Deckel verschlossen. Es ist vorteilhaft, wenn zumindest ein Teil der Fächer 41, 42, 43 gekühlt werden kann. Dazu kann das für die Kühlung des Warenträgers 34 vorgesehene Kühlaggregat Verwendung finden. An der Schrankwand 40 kann ferner ein Zeitungsständer 48 zur Aufnahme von Zeitungen und Zeitschriften vorgesehen sein.

In die Thekenfläche 32 ist ein Spülbecken 44 eingelassen, das in einen im Inneren des Fahrgestells 31 vorgesehenen Abwasserbehälter 45 entwässert, der in Fig. 3 nur angedeutet ist. Ferner ist ein in Fig. 3 ebenfalls nur angedeuteter Vorratsbehälter 46 zur Aufnahme eines Frischwasservorrats vorgesehen, wobei die Aufbereitungsmaschine 33 und ein Wasserhahn 47 des Spülbeckens 44 mit diesem Vorratsbehälter 46 verbunden sind. Das Fahrzeug 1 ist deshalb bezüglich der Wasser- und Abwasserversorgung sowie der Stromversorgung vollständig autark.

Die Aufbereitungsmaschine 33 ist über Schwingungspuffer an dem Fahrgestell 31 gelagert, um zu vermeiden, daß sich bei dem Transport des Fahrzeugs 1 ergebende Schwingungen störend auf die Aufbereitungsmaschine 33 übertragen.

Des weiteren hat sich gezeigt, daß bei dem Transport des Fahrzeugs 1 das lösliche Getränkepulver oder andere pulverförmige Zusatzstoffe, beispielsweise Milchpulver, aus ihren Vorratsbehältern herausgerüttelt werden und zu den ihnen zugeordneten Fördereinrichtungen vordringen können. Dies führt zu einer Fehlzumessung bei der nachfolgenden GetränkeZubereitung und ferner zu einem erhöhten Verbrauch des Getränkepulvers bzw. der pulverförmigen Zusatzstoffe. Diese Fehlzumessung kann vermieden werden, wenn jeweils ein steuerbares Ventil, beispielsweise ein Magnetventil, zwischen den Vorratsbehältern und der zugeordneten Fördereinrichtungen angeordnet ist, um die Verbindung zwischen dem Vorratsbehälter und der Fördereinrichtung beim Transport des Fahrzeugs 1 zu unterbrechen.

Fig. 4 zeigt in einer vergrößerten, detaillierteren Darstellung den Tassenspender 53. Eine Hohlschiene 62 besteht vorzugsweise aus einem transparenten Kunststoffmaterial und umfaßt die innerhalb der Hohlschiene 62 gestapelten Tassen 50 unter Freilassung eines axialen Schlitzes 51. Die Tassen 50 haben jeweils einen Henkel 52, der durch den axialen Schlitz 51 hindurch ragt. Dadurch sind die Tassen 50 an ihrem Henkel 52 in dem axialen Schlitz 51 geführt. Die Hohlschiene 62 ist auf einen an der Thekenfläche 32 vorgesehenen Befestigungszylinder 61 aufgesteckt.

Die Tassen 50 können in der Hohlschiene 62 bevorratet werden. Wenn die Tassen 50 einer Hohlschiene 62 verbraucht sind, kann eine neue mit Tassen 50 bestückte Hohlschiene 62 bereitgestellt werden, die auf den Befestigungszylinder 61 auf der Thekenfläche 32 aufgesteckt wird.

Um die Tassen 50 in der Hohlschiene 62 bei der Bevorratung zu arretieren, ist an der Hohlschiene 62 ein elastisches Band 54, beispielsweise ein Gummiband, vorgesehen. Ein erstes Ende 55 des elastischen Bandes 54 ist beispielsweise an einer Bohrung 56 der Hohlschiene 62 befestigt, während ein zweites Ende 57 des elastischen Bandes 54 ein hakenartiges Element 58 aufweist. Das hakenartige Element 58 ist beispielsweise in den Henkel 52 der obersten Tasse 50 einhakbar, so daß die Tassen 50 gegen einen sich quer zu einer Längsachse 59 der Hohlschiene 62 erstreckenden Querbolzen 60 vorgespannt werden und so innerhalb der Hohlschiene 62 axial arretiert sind. Der Schlitz 51 erstreckt sich vorzugsweise nur über den Bereich der Tassen 50, so daß die Bohrung 56 auch in der Verlängerung des Schlitzes 51 angeordnet sein kann.

Wie aus Fig. 3 zu erkennen, sind weitere Hohlschienen 62 mit fertig bestückten Tassen 50 in der Nähe des Deckenteils 9 angeordnet. An dem Deckenteil 9 ist dazu eine Leiste 70 mit mehreren Befestigungszylindern 71 vorgesehen, wobei die Befestigungszylinder 71 den gleichen Durchmesser haben, wie der an der Thekenfläche 32 vorgesehene Befestigungszylinder 61. Während die Hohlschiene 62 auf den an der Thekenfläche 32 vorgesehenen Befestigungszylinder 61 im wesentlichen vertikal aufsteckbar ist und somit die Tassen 50 aus der Hohlschiene in vertikaler Richtung entnehmbar sind, sind die zur Bevorratung der Tassen 50 dienenden weiteren Hohlschienen 62 auf die Befestigungszylinder 71 der Leiste 70 im wesentlichen horizontal aufsteckbar. Dadurch sind die Hohlschienen 62 an der Leiste 70 im wesentlichen horizontal, d. h. parallel zu dem Deckenteil 9 ausgerichtet. Durch die erfindungsgemäße Befestigungsmöglichkeit der mit Tassen 50 bestückten Hohlschienen 62 an der in der Nähe des Deckenteils 9 befestigten Leiste 70 ergibt sich eine raumsparende und funktionell sehr einfache und bequeme Bevorratung der Tassen 50. Das Fahrzeug 1 kann vor seinem Einsatz mit mit gespülten Tassen 50 bestückten Hohlschienen 62 ausgerüstet werden, wobei der Tassenvorrat auch für einen längeren Einsatz ausreicht. Die benutzten Tassen 50 können wieder in die Hohlschienen 62 eingeschoben werden und beispielsweise in einem der Fächer 41 bis 43 gelagert werden.

Die Erfindung ist nicht auf das dargestellte Ausführungsbeispiel beschränkt. Die Erfindung kann insbesondere auch an einem mehr als dreirädrigen Fahrzeug 1 in der gleichen kompakten Bauweise zum Einsatz kommen.

### [Bezugszeichenliste]

- 1: Fahrzeug
- 2: Ladezone
- 3: Rad
- 4: Rad
- 5: Rad
- 6: Seitenwand
- 7: Führerhaus
- 8: Rückwand
- 9: Deckenteil
- 10: Griff
- 11: Griff
- 12: Seitenwand
- 13: Stützgestell
- 14: Stützgestell
- 15: Eckteil
- 16: Eckteil
- 17: Beleuchtungskörper
- 30: Theke
- 31: Fahrgestell
- 32: Thekenfläche
- 33: Aufbereitungsmaschine
- 34: Warenträger
- 35: Zum Verkauf angebotene Waren
- 36: Stützsäule
- 37: Stützsäule
- 38: Bedienfeld
- 39: Tassen
- 40: Schrankverkleidung
- 41: Fach
- 42: Fach
- 43: Fach
- 44: Spülbecken
- 45: Abwasserbehälter
- 46: Vorratsbehälter
- 47: Wasserhahn
- 50: Tassen
- 51: Schlitz
- 52: Henkel
- 53: Tassenspender
- 54: Elastisches Band
- 55: Erstes Ende des elastischen Bandes
- 56: Bohrung
- 57: Zweites Ende des elastischen Bandes
- 58: Hakenartiges Element
- 59: Längsachse
- 60: Querbolzen
- 61: Befestigungszylinder
- 62: Hohlschiene
- 70: Leiste
- 71: Befestigungszylinder

## Patentansprüche

1. Fahrzeug (1) mit integrierter Theke (30) mit
einer allseitig durch Wandteile (6, 12, 8) verschließbaren Ladezone (2) und
einer durch Aufklappen zumindest eines der Wandteile (6, 12, 8) freilegbaren Thekenfläche (32), **dadurch gekennzeichnet, dass** die Thekenfläche eine Aufbereitungsmaschine (33) zur Zubereitung von heißen Getränken aus einem löslichen Getränkepulver und einen Warenträger (34), auf welchen zum Verkauf angebotene Waren auflegbar sind, zumindest teilweise umgibt.

2. Fahrzeug nach Anspruch 1,
**dadurch gekennzeichnet,**
**daß** die Wandteile (6, 12, 8) jeweils eine Seitenwand (6, 12) an beiden Seiten des Fahrzeugs (1) und eine Rückwand (8) an der Rückseite des Fahrzeugs (1) umfassen, die um eine im wesentlichen horizontale Schwenkachse so aufklappbar sind, daß sie mit einem die Ladezone (2) überdeckenden Deckenteil (9) eine ebene Dachfläche bilden.

3. Fahrzeug nach Anspruch 2,
**dadurch gekennzeichnet,**
**daß** die Dachfläche durch zwei Eckenteile (15, 16) ergänzt wird, die aus einem flexiblen Material bestehen und jeweils zwischen einer der Seitenwände (6, 12) und der Rückwand (8) beim Aufklappen der Seitenwände (6, 12) und der Rückwand (8) aufgespannt werden.

4. Fahrzeug nach einem der Ansprüche 1 bis 3,
**dadurch gekennzeichnet,**
**daß** der Warenträger (34) gekühlt ist.

5. Fahrzeug nach einem der Ansprüche 1 bis 4,
**dadurch gekennzeichnet,**
**daß** der Warenträger (34) eine dachförmige Oberfläche mit zwei zu jeweils einer Seite des Fahrzeugs (1) geneigten Warenaufnahmeflächen hat.

6. Fahrzeug nach einem der Ansprüche 1 bis 5,
**dadurch gekennzeichnet,**
**daß** die Aufbereitungsmaschine (33) mit einem Vorratsbehälter (46) zur Aufnahme eines Wasservorrats verbunden ist.

7. Fahrzeug nach einem der Ansprüche 1 bis 6,
**dadurch gekennzeichnet,**
**daß** in die Thekenfläche (32) ein Spülbecken (45) eingelassen ist, das in einen Abwasserbehälter (45) entwässert und mit dem Vorratsbehälter (46) verbunden ist.

8. Fahrzeug nach einem der Ansprüche 1 bis 7,
**dadurch gekennzeichnet,**
**daß** mehrere mit einem von einer Seite oder der Rückseite des Fahrzeugs (1) zugängliche Fächer (41-43) zur Aufnahme eines Warenvorrats, des Getränkepulvers oder von eines Tassenvorrats vorgesehen sind.

9. Fahrzeug nach Anspruch 8,
**dadurch gekennzeichnet,**
**daß** zumindest ein Teil der Fächer (41-43) gekühlt ist.

10. Fahrzeug nach einem der Ansprüche 1 bis 9,
**dadurch gekennzeichnet,**
**daß** das Fahrzeug (1) ein motorisiertes Dreirad ist, das vor der Ladezone (2) ein Führerhaus (7) aufweist, wobei sich zwei Räder (3, 4) unterhalb der Ladezone (2) befinden und sich ein drittes Rad (5) im Bereich des Führerhauses (7) befindet.

11. Fahrzeug nach einem der Ansprüche 1 bis 10,
**dadurch gekennzeichnet,**
**daß** die Stromversorgung der Aufbereitungsmaschine (33) mittels elektrischer Akkumulatoren erfolgt, die von einer Lichtmaschine des Fahrzeugs (1) oder durch Solarzellen geladen werden.

12. Fahrzeug nach einem der Ansprüche 1 bis 10,
**dadurch gekennzeichnet,**
**daß** die Stromversorgung der Aufbereitungsmaschine (33) mittels eines Stromaggregats mit einem separaten Verbrennungsmotor erfolgt.

13. Fahrzeug nach einem der Ansprüche 1 bis 12,
**dadurch gekennzeichnet,**
**daß** auf der Thekenfläche (32) zumindest ein Tassenspender (53) vorgesehen ist, der einen mit der Thekenfläche (32) verbundenen Befestigungszylinder (61) und eine auf den Befestigungszylinder (61) im wesentlichen vertikal aufsteckbare Hohlschiene (62) umfaßt, die die Tassen (50) unter Freilassung eines axialen Schlitzes (51) umschließt, wobei Henkel (52) der Tassen (50) durch den Schlitz (51) hindurch ragen.

14. Fahrzeug nach Anspruch 13,
**dadurch gekennzeichnet,**
**daß** zur Bevorratung von mit Tassen (50) bestückten weiteren Hohlschienen (62) sich in der Nähe des Deckenteils (9) eine Leiste (70) mit Befestigungszylindern (71) befindet, auf die die Hohlschienen (62) im wesentlichen horizontal aufsteckbar sind.

15. Fahrzeug nach Anspruch 13 oder 14,
**dadurch gekennzeichnet,**
**daß** an jeder Hohlschiene (62) ein erstes Ende (55) eines elastischen Bandes (54) befestigt ist, das an seinem zweiten Ende (57) ein hakenartiges Element (58) aufweist, das in die oberste mehrerer gestapelter Tassen (50) einhakbar ist.

## Claims

1. Vehicle (1) with integrated sales counter (30) having a loading zone (2) closable on all sides by wall parts (6, 12, 8) and
a sales counter surface (32) revealable by hinging at least one of the wall parts (6, 12, 8) in an upward direction,
**characterized in**
**that** the sales counter surface at least partially surrounds a processing machine (33) for preparing hot drinks from a soluble drinks powder and a product carrier (34), on which products offered for sale are displayable.

2. Vehicle according to claim 1,
**characterized in**
**that** the wall parts (6, 12, 8) comprise in each case a side wall (6, 12) on either side of the vehicle (1) and a back wall (8) at the rear of the vehicle (1), which walls are hingeable in an upward direction about a substantially horizontal swivelling axis in such a way as to form, together with a top part (9) overlapping the loading zone (2), a flat roof surface.

3. Vehicle according to claim 2,
**characterized in**
**that** the roof surface is supplemented by two corner parts (15, 16), which are made of a flexible material and which, when the side walls (6, 12) and the back wall (8) are hinged in an upward direction, are spread out in each case between one of the side walls (6, 12) and the back wall (8).

4. Vehicle according to one of claims 1 to 3,
**characterized in**
**that** the product carrier (34) is chilled.

5. Vehicle according to one of claims 1 to 4,
**characterized in**
**that** the product carrier (34) has a roof-shaped surface with two product receiving areas, which are inclined each towards one side of the vehicle (1).

6. Vehicle according to one of claims 1 to 5,
**characterized in**
**that** the processing machine (33) is connected to a storage tank (46) for receiving a water supply.

7. Vehicle according to one of claims 1 to 6,
**characterized in**
**that** let into the sales counter surface (32) is a sink (45), which drains into a waste water tank (45) and is connected to the storage tank (46).

8. Vehicle according to one of claims 1 to 7,
**characterized in**
**that** a plurality of compartments (41-43) accessible from one side or the rear of the vehicle (1) are provided for receiving a stock of products, the drinks powder or a stock of cups.

9. Vehicle according to claim 8,
**characterized in**
**that** at least some of the compartments (41-43) are chilled.

10. Vehicle according to one of claims 1 to 9,
**characterized in**
**that** the vehicle (1) is a three-wheeled motor vehicle, which in front of the loading zone (2) has a driver's cab (7), wherein two wheels (3, 4) are situated below the loading zone (2) and a third wheel (5) is situated in the region of the driver's cab (7).

11. Vehicle according to one of claims 1 to 10,
**characterized in**
**that** the supply of power to the processing machine (33) is effected by means of electric batteries, which are charged by a generator of the vehicle (1) or by solar cells.

12. Vehicle according to one of claims 1 to 10,
**characterized in**
**that** the supply of power to the processing machine (33) is effected by means of a generating set with a separate internal combustion engine.

13. Vehicle according to one of claims 1 to 12,
**characterized in**
**that** at least one cup dispenser (53) is provided on the sales counter surface (32) and comprises a fastening cylinder (61) connected to the sales counter surface (32) and a hollow rail (62), which is mountable substantially vertically onto the fastening cylinder (61) and surrounds the cups (50), while leaving an axial slot (51) free, wherein handles (52) of the cups (50) project through the slot (51).

14. Vehicle according to claim 13,
**characterized in**
**that** for storing further hollow rails (62) filled with cups (50) a batten (70) is situated in the vicinity of the top part (9) and has fastening cylinders (71), onto which the hollow rails (62) are mountable substantially horizontally.

15. Vehicle according to claim 13 or 14,
**characterized in**
**that** fastened to each hollow rail (62) is a first end (55) of an elastic band (54), which on its second end (57) has a hook-like element (58), which is hookable into the uppermost of a plurality of stacked cups (50).

## Revendications

1. Véhicule (1) à comptoir (30) intégré, comportant une zone de chargement (2) pouvant être fermée de tous côtés par des éléments de paroi (6, 12, 8), et une surface de comptoir (32) pouvant être dégagée par le relèvement de l'un au moins des éléments de paroi (6, 12, 8),
**caractérisé en ce que**
la surface de comptoir (32) entoure, au moins partiellement, une machine de préparation (33) destinée à la préparation de boissons chaudes à partir d'une poudre soluble pour boissons, et un support (34) de marchandises sur lequel peuvent être déposées des marchandises proposées à la vente.

2. Véhicule selon la revendication 1,
**caractérisé en ce que**
les éléments de paroi (6, 12, 8) comprennent une paroi latérale (6, 12) de chacun des deux côtés du véhicule (1), et une paroi arrière (8) sur la face arrière du véhicule (1), qui peuvent être relevées autour d'un axe de pivotement sensiblement horizontal de telle sorte qu'elles forment avec un élément de couverture (9) recouvrant la zone de chargement (2) une surface de toiture plane.

3. Véhicule selon la revendication 2,
**caractérisé en ce que**
la surface de toiture est complétée par deux éléments d'angle (15, 16) qui sont constitués d'un matériau flexible, et qui sont tendus entre l'une des parois latérales (6, 12) et la paroi arrière (8) lors du relèvement des parois latérales (6, 12) et de la paroi arrière (8).

4. Véhicule selon l'une quelconque des revendications 1 à 3,
**caractérisé en ce que**
le support (34) de marchandises est réfrigéré.

5. Véhicule selon l'une quelconque des revendications 1 à 4,
**caractérisé en ce que**
le support (34) de marchandises possède une surface en forme de toit comportant deux surfaces de réception de marchandises inclinées respectivement vers les côtés du véhicule (1).

6. Véhicule selon l'une quelconque des revendications 1 à 5,
**caractérisé en ce que**
la machine de préparation (33) est reliée à un récipient de réserve (46) pour une réserve d'eau.

7. Véhicule selon l'une quelconque des revendications 1 à 6,
**caractérisé en ce que**
un évier (45) est intégré dans la surface de comptoir (32), dont l'évacuation débouche dans un récipient d'eaux usées (45), et qui est relié au récipient de réserve (46).

8. Véhicule selon l'une quelconque des revendications 1 à 7,
**caractérisé en ce que**
il est prévu plusieurs compartiments (41 à 43) accessibles à partir d'un côté ou de la face arrière du véhicule (1), qui sont destinés à la réception d'une réserve de marchandises, de la poudre pour boissons ou d'une réserve de tasses.

9. Véhicule selon la revendication 8,
**caractérisé en ce que**
une partie au moins des compartiments (41 à 43) est réfrigérée.

10. Véhicule selon l'une quelconque des revendications 1 à 9,
**caractérisé en ce que**
le véhicule (1) est un véhicule motorisé à trois roues qui comporte une cabine de conducteur (7) devant la zone de chargement (2), deux roues (3, 4) étant en l'occurrence situées sous la zone de chargement (2), et une troisième roue (5) étant positionnée dans la zone de la cabine du conducteur (7).

11. Véhicule selon l'une quelconque des revendications 1 à 10,
**caractérisé en ce que**
l'alimentation en courant de la machine de préparation (33) est effectuée au moyen d'accumulateurs électriques qui sont chargés par une dynamo du véhicule (1) ou par des cellules solaires.

12. Véhicule selon l'une quelconque des revendications 1 à 10,
**caractérisé en ce que**
l'alimentation en courant de la machine de préparation (33) est effectuée au moyen d'un groupe électrogène avec un moteur à combustion interne séparé.

13. Véhicule selon l'une quelconque des revendications 1 à 12,
**caractérisé en ce que**,
sur la surface de comptoir (32), il est prévu au moins un distributeur (53) de tasses comportant un cylindre de fixation (61) relié à la surface de comptoir (32), et un rail creux (62) pouvant être emboîté sensiblement à la verticale sur le cylindre de fixation (61) qui enserre les tasses (50) en laissant subsister une fente axiale (51), les anses (52) des tasses (50) dépassant de la fente (51).

14. Véhicule selon la revendication 13,
**caractérisé en ce que**,
pour la tenue en réserve d'autres rails creux (62) munis de tasses (50), une traverse (70) est située à proximité de l'élément de couverture (9), laquelle comporte des cylindres de fixation (71) sur lesquels les rails creux (62) peuvent être emboîtés sensiblement à l'horizontale.

15. Véhicule selon l'une des revendications 13 ou 14,
**caractérisé en ce que**
une première extrémité (55) d'une bande élastique (54) est fixée sur chaque rail creux (62), laquelle comporte au niveau de sa deuxième extrémité (57) un élément (58) de type crochet qui peut être engagé dans la tasse supérieure de plusieurs tasses (50) empilées.
